# EUROPEAN PATENT APPLICATION

(11) **EP 2 642 408 A1**
(43) Date of publication of application: **25.09.2013**
(21) Application number: 12188597.4
(22) Date of filing: 15.10.2012
(51) Int. Cl.: G06F 17/30

(54) **Information processing apparatus and information processing method**

(30) Priority: 22.03.2012 JP 2012066374
(71) Applicant: Kabushiki Kaisha Toshiba, Tokyo 105-8001 (JP)
(72) Inventor: Tateno, Tsuyoshi, Tokyo (JP)
(74) Representative: Henkel, Breuer & Partner

(57) **Abstract**

According to one embodiment, an information processing apparatus includes: a generator configured to generate an audio signal; an instructing module configured to issue an instruction to search for song name information relating to the audio signal according to an external manipulation; a cutting-out module configured to cut out a portion of the audio signal in an interval around a time of issuance of the search instruction; a removing module configured to remove a silent portion in the cutting-out interval; a sending module configured to send information in the silent-portion-removed cut-out interval to a server; and a receiver configured to receive a search result of song name information relating to the information in the silent-portion-removed cut-out interval from the server.

## Description

### CROSS REFERENCE TO RELATED APPLICATION(S)

The application is based upon and claims the benefit of priority from Japanese Patent Application No. 2012-066374 filed on March 22, 2012, the entire contents of which are incorporated herein by reference.

### BACKGROUND

### 1. Field

The present invention relates to an information processing apparatus and an information processing method.

### 2. Description of the Related Art

Among information processing apparatus are ones which extract music. It is intended to increase the accuracy of extracting songs from broadcast information. However, in this prior art technique, audio data are analyzed all the time to detect song intervals and hence a heavy load is imposed on the apparatus.

### BRIEF DESCRIPTION OF THE DRAWINGS

A general configuration that implements the various feature of embodiments will be described with reference to the drawings. The drawings and the associated descriptions are provided to illustrate embodiments and not to limit the scope of the embodiments.
Figs. 1A and 1B outline systems according to an embodiment of the present invention.
Fig. 2 shows the configuration of an audio processing apparatus according to the embodiment.
Fig. 3 shows a functional module configuration employed in the embodiment.
Fig. 4 is a flowchart of a song name search which is performed in the embodiment.
Fig. 5 shows an example display picture which is displayed on a display unit used in the embodiment.
Fig. 6 is a flowchart of a ring buffer control which is performed in the embodiment.
Fig. 7 illustrates the ring buffer for song name search used in the embodiment.
Fig. 8 is a flowchart of an audio data cutting-out process which includes re-setting of a search subject interval at the time of detection of a silent portion.

### DETAILED DESCRIPTION

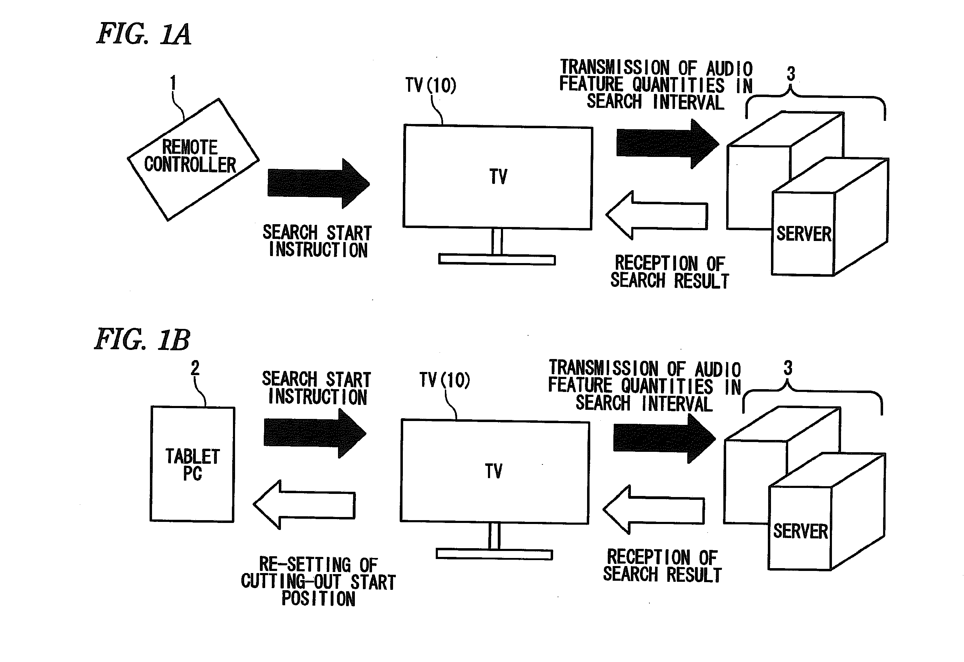

An embodiment of the present invention will be hereinafter described with reference to Figs. 1A and 1B to Fig. 8. Figs. 1A and 1B outline systems according to the embodiment of the invention.

Fig. 1A shows a system which is centered by a TV receiver (digital TV recording/reproducing apparatus 10 (described below in detail)) and includes its remote controller 1 and an external server 3. An instruction to start a search for the name etc. of a song to which the user of the TV receiver is listening is issued using the remote controller 1. The TV receiver sends feature quantities of the song to the external server 3. The TV receiver receives and displays a song name etc. which are a result of a search made by the external server 3 on the basis of the feature quantities.

Fig. 1B shows a system which is a modified version of the system of Fig. 1A. In this system, a tablet PC 2 issues a search start instruction instead of the remote controller 1. The TV receiver receives a song name etc. which are a result of a search made by the external server 3 on the basis of feature quantities of a song and transfers them to the tablet PC 2. The tablet PC 2 displays the song name etc.

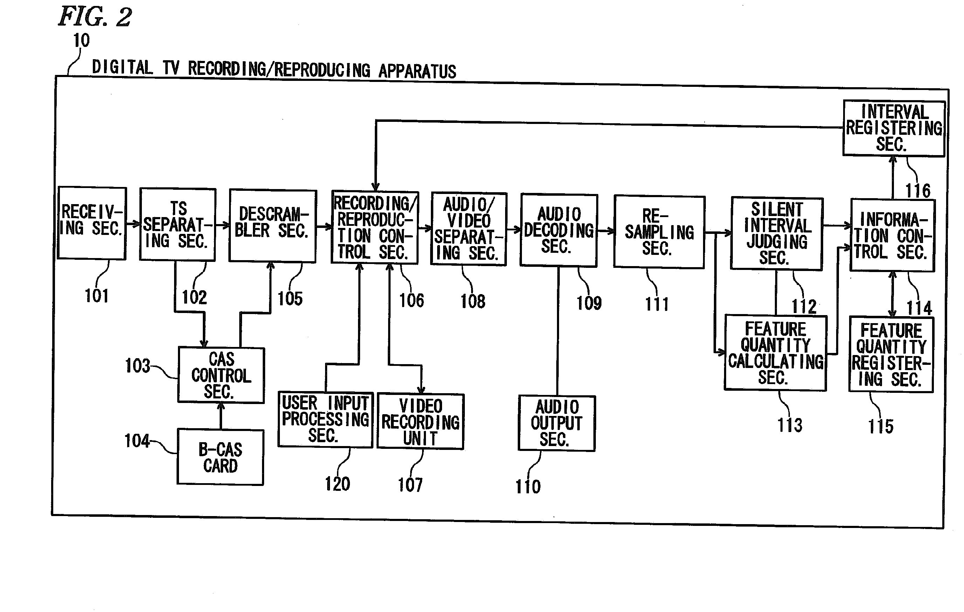

Next, the system configuration of an audio processing apparatus that is an information processing apparatus according to the embodiment will be described with reference to Fig. 2. The audio processing apparatus is realized as a digital TV recording/reproducing apparatus 10. The digital TV recording/reproducing apparatus 10 can detect a silent interval of, for example, several hundreds of milliseconds existing in a TV broadcast program.

The digital TV recording/reproducing apparatus 10 is equipped with a receiving section 101, a TS separating section 102, a CAS control section 103, a B-CAS card 104, a descrambler section 105, a recording/reproduction control section 106, a video recording unit 107, an audio/video separating section 108, an audio decoding section 109, an audio output section 110, a re-sampling section 111, a silent interval judging section 112, a feature quantity calculating section 113, an information control section 114, a feature quantity registering section 115, an interval registering section 116, a user input processing section 120 (which receives a data signal from the remote controller 1), and a display unit (not shown) such as a monitor.

The receiving section 101 is connected to a TV broadcast wave receiving antenna (not shown) and receives a TV broadcast. When a TV broadcast wave signal received by the antenna is input to the receiving section 101, the receiving section 101 demodulates it and outputs a resulting broadcast signal to the TS separating section 102.

The TS separating section 102 separates a transport stream (TS) of the broadcast signal received from the receiving section 101 into elementary streams (ESs) which are coded audio data and video data, entitlement control messages (ECMs; encrypted information), etc. The TS separating section 102 outputs the elementary streams and the entitlement control messages to the descrambler section 105 and the CAS control section 103, respectively.

The CAS control section 103 decrypts the entitlement control messages (encrypted information) received from the TS separating section 102 using a work key (Kw) that is set for each of broadcasting companies whose names are stored in the CAS card 104, and judges whether to permit viewing by comparing attribute information of the program contained in the entitlement control messages with contract information stored in the B-CAS card 104. If judging that viewing should be permitted, the CAS control section 103 decrypts a scrambling key (Ks) and outputs the resulting scrambling key to the descrambler section 105.

The descrambler section 105 descrambles the elementary streams (audio data and video data) that are input from the TS separating section 102 using the scrambling key (Ks) that is input from the CAS control section 103, and outputs the descrambled audio data and video data to the recording/reproduction control section 106.

The recording/reproduction control section 106 controls recording processing and the reproduction processing. In recording processing, the recording/reproduction control section 106 combines audio data and video data into a single transport stream for each content and records the transport stream in the video recording unit 107 and outputs the transport stream to the audio/video separating section 108. In recording processing, the recording/reproduction control section 106 can record, in the video recording unit 107, division information that is input from the interval registering section 116 (described later) and a moving image content or the like in such a manner that they are correlated with each other. Also, the recording/reproduction control section 106 can record a particular interval portion of a moving image content or the like by cutting it out on the basis of the division information.

Furthermore, the recording/reproduction control section 106 controls processing of reproducing a content that is recorded in the video recording unit 107. That is, the recording/reproduction control section 106 loads a transport stream of a content and outputs it to the audio/video separating section 108.

The audio/video separating section 108 separates the transport stream that is input from the recording/reproduction control section 106 into an audio signal and a video signal and outputs them to the audio decoding section 109 and a video decoding section (not shown), respectively.

The audio decoding section 109 decodes the audio signal that is input from the audio/video separating section 108 into a signal having such a format as PCM. In recording processing, the audio decoding section 109 outputs the decoded audio signal to the re-sampling section 111. In reproduction processing, the audio decoding section 109 outputs the decoded audio signal to the audio output section 110.

The re-sampling section 111 performs re-sampling processing of converting the sampling frequency of an audio signal that is input from the decoding section 109. For example, in the digital broadcast, the sampling frequency of an audio signal is 48 kHz. The re-sampling section 111 re-samples an audio signal at a lower frequency and thereby converts it into an audio signal having a sampling frequency 12 kHz, for example.

The re-sampling section 111 performs re-sampling after performing processing of removing an audio component in a frequency range that is higher than a prescribed frequency from subject audio samples. The re-sampling processing can be performed using a known technique. The re-sampling section 111 outputs the re-sampled audio signal to the silent interval judging section 112 and the feature quantity calculating section 113.

The silent interval judging section 112 judges whether or not volume levels of audio samples in each constant interval among the audio samples of the received audio signal are within a prescribed range. The silent interval judging section 112 detects, as a silent interval, an interval in which it has been judged plural times consecutively that the volume level is within the prescribed range. Upon detecting a silent interval, the silent interval judging section 112 informs the feature quantity calculating section 113 and the information control section 114 of that fact. The functions of the information control section 114 include transmission of silent interval information and feature quantities and exchange of transmission/reception data with the external server 3 and the user terminal 2 via a LAN interface or by radio.

After receiving the notice of detection of the silent interval, the feature quantity calculating section 113 calculates feature quantities of a prescribed number of consecutive audio samples among the audio samples of the audio signal. The feature quantity calculating section 113 calculates feature quantities a prescribed time (e.g., 1 sec) after the reception of the silent interval detection notice from the silent interval judging section 112. The feature quantity calculating section 113 is an application program capable of extracting, from audio samples, feature quantities that enable the external server 3 to perform a music information search.

The feature quantity calculating section 113 is provided to calculate feature quantities of music signal samples in an audio interval. The feature quantity calculating section 113 outputs data of calculated feature quantities to the information control section 114 and have them registered in the feature quantity registering section 115 until transmission to the external server 3. As a result, the information control section 114 which functions as a data transmitting section can send necessary feature quantities to the external server 3 which performs a music information search via a communication network and an external router or a modem connected to it by an Ethernet (registered trademark) wired network.

The information control section 114 causes the interval registering section 116 to register the subject interval in the audio signal on the basis of the silent interval detection notice that is input from the silent interval judging section 112.

In the embodiment, it is intended to apply a function of searching for the name of a song being played in a TV program or a commercial message to a TV receiver (i.e., to give the TV receiver an additional function). If a user issues a search instruction with such timing that he or she wants to make a search about music being played by a TV receiver, the TV receiver cuts out search subject audio data (PCM data) and generates feature quantities that are necessary for the search. The TV receiver sends the generated feature quantities to the external server 3. Upon completion of the search, the TV receiver is informed of a search result by the external server 3.

When a search is made of music being played in an ordinary TV program, in many cases audio data contains many sounds other than the music such human voices and a desired search result cannot be obtained even if audio data having a prescribed length is specified. Furthermore, if the target music portion finishes before completion of acquisition of search subject data, the amount of data that is necessary for the search becomes insufficient and the search will fail.

The embodiment provides an audio data acquisition method for preventing occurrence of a search error due to insufficient search subject data.

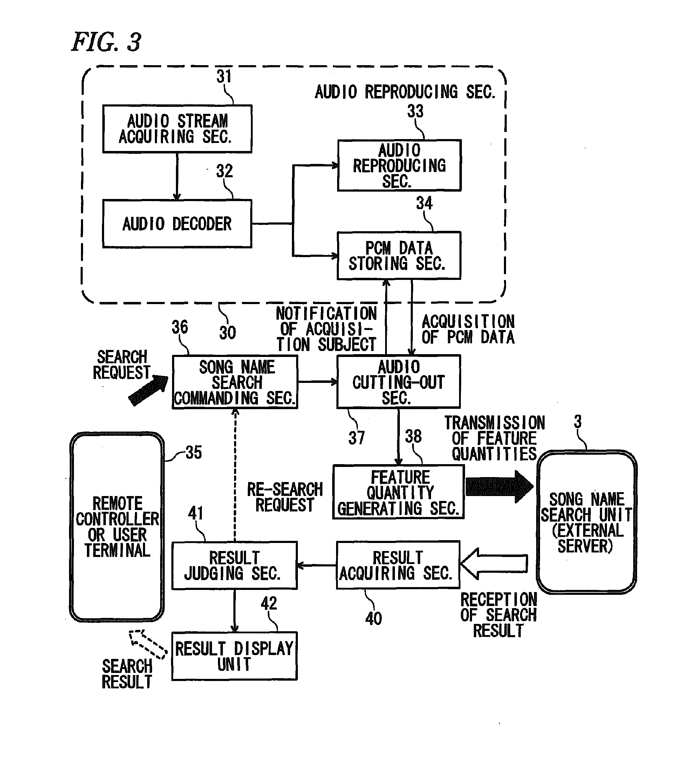

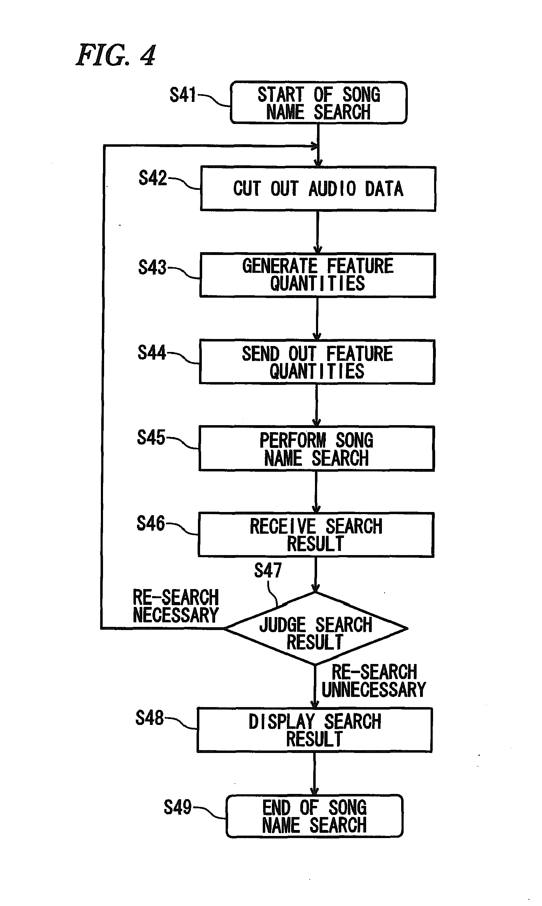

Figs. 3 and 4 show a functional module configuration and a process flow of a case that the digital TV recording/reproducing apparatus 10 performs a song name search.

The module configuration includes an audio reproducing section 30 which is composed of an audio stream acquiring section 31, an audio decoder 32, an audio reproducing section 33, and a PCM data storage unit 34 and a commanding means 35 which is the remote controller 1 (infrared or radio) or the user terminal 2 (tablet PC; radio).

The module configuration also includes a song name search commanding section 36, an audio cutting-out section 37, a feature quantity generating section 38, a result acquiring section 40, a result judging section 41, and a result display unit 42 (display device) which includes the screen of the digital TV recording/reproducing apparatus 10 or the user terminal 2.

The audio stream acquiring section 31 mainly corresponds to the receiving section 101 to the audio/video separating section 108. The audio decoder 32 corresponds to the audio decoding section 108. The audio reproducing section 33 corresponds to the audio output section 110. The PCM data storage unit 34 corresponds to the sampling section 111.

The song name search commanding section 36 corresponds to the user input processing section 120. The audio cutting-out section 37 and the feature quantity generating section 38 correspond to the silent interval judging section 112 and the feature quantity calculating section 113, respectively. The result acquiring section 40 and the result judging section 41 correspond to the information control section 114.

The audio stream acquiring section 31 acquires a reproduction subject audio stream and supplies it to the audio decoder 32. The audio decoder 32 decodes the audio stream and output the same PCM data to the audio reproducing section 33 and the PCM data storage unit 34. The PCM data received by the audio reproducing section 33 is discarded after being output to speakers. The PCM data received by the PCM data storage unit 34 is re-sampled if necessary for the purpose of reduction of the processing load, and is stored in a ring buffer (not shown) of the PCM data storage unit 34 and will be referred to at the time of a song name search.

The process flow shown in Fig. 4 will be described below.

At step S41, a user issues an instruction to start a song name search using the remote controller 1 or the user terminal 2 (commanding means 35). In the digital TV recording/reproducing apparatus 10, the search start instruction of the user is supplied to the song name search commanding section 36. The remote controller 1 may have a button that is dedicated to the issuance of a search start instruction. Alternatively, the digital TV recording/reproducing apparatus 10 may be configured so as to allow a user to issue a search start instruction in an interactive manner using a certain button while watching a menu being displayed on the TV screen.

At step S42, when receiving the song name search instruction, the song name search commanding section 36 processing that is necessary for a song name search. The audio cutting-out section 37 starts audio cutting-out processing. For example, the processing that is necessary for a song name search is activation of application software for transmission of feature quantities to the external server 3. In this connection, in many cases, various kinds of initialization processing and license authentication processing are performed. The audio cutting-out section 37 acquires PCM data having a prescribed length that is necessary for a song name search from the PCM data storage unit 34.

Upon completion of the acquisition of PCM data having the prescribed length, at step S43 the feature quantity generating section 38 generates information necessary for a song name search (feature quantities that allow the external server 3 to search for song name information; for example, pieces of magnitude judgment information for respective frequencies of the PCM data). Upon completion of the generation of information necessary for a song name search by the feature quantity generating section 38, at step S44 the digital TV recording/reproducing apparatus 10 sends the generated information (data) to the external server 3.

At step S45, the external server 3 performs a song name search. Upon completion of the search, the external server 3 sends a search result to the digital TV recording/reproducing apparatus 10. At step S46, the result acquiring section 40 receives the search result and passes song name information represented by, for example, character strings (it is preferable that the song name information include, in addition to a song name, accompanying information such as an artist name, a composer name, a lyricist name, an album title, and a label) to the result judging section 41. The digital TV recording/reproducing apparatus 10 is configured so as to generate such a character string as "no query" if no song name information has been acquired.

If song name information has been acquired (S47: "re-search unnecessary"), the result judging section 41 generates result character strings for user notification and passes them to the result display unit 42.

If no song name information has been acquired (S47: "re-search necessary"), the result judging section 41 supplies a re-search request to the song name search commanding section 36 if necessary (e.g., if a setting to that effect was made by the user).

At step S48, the result display unit 42 displays the search result on the digital TV recording/reproducing apparatus 10 or the user terminal 2 depending on the source of the search request. The process is finished at step S49.

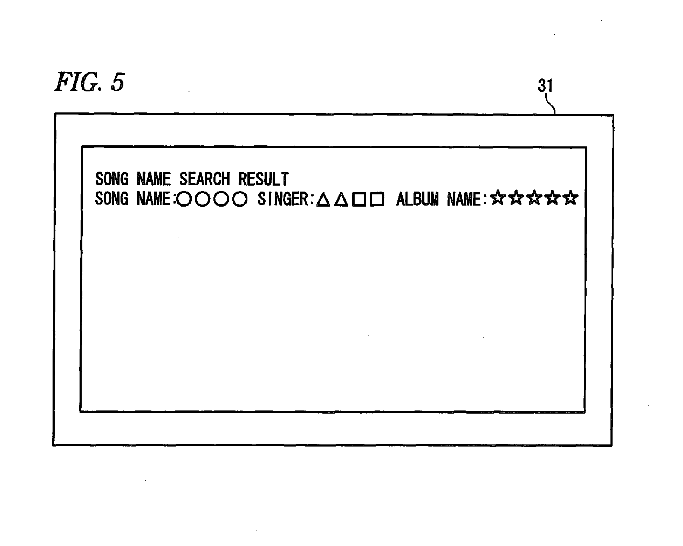

Fig. 5 shows an example display picture. As shown in Fig. 5, for example, a song name, an artist name, and a composer name are displayed on a portion (in the example of Fig. 5, a top portion) of the display screen of the display unit 31.

It is intended to cut out audio data which is more appropriate than in conventional cases by judging whether or not silent data is detected in cutting out audio data.

Usually, silent data are inserted at the boundaries of a commercial message. In the embodiment, silent data is assumed to correspond to a boundary of a musical piece even in scenes other than commercial messages. If a cut-out song name search interval includes silent data, it is judged that data that does not belong to a target musical piece is inserted there and data excluding the silent data is employed as search subject data. Whether or not silent data is inserted may be judged using an existing technique. For example, any of the techniques disclosed in JP-A-2011-75935 (the inventors are the same as of this application) and the references cited therefor.

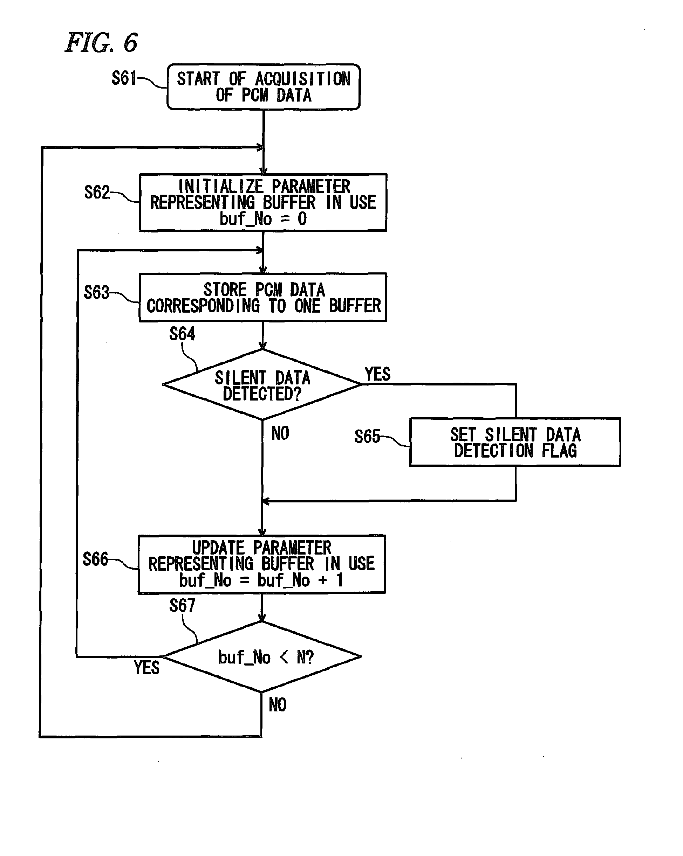

PCM data produced as a TV program is viewed are stored successively using a ring buffer. Fig. 6 is a flowchart showing how PCM data are stored in the ring buffer. In Fig. 6, the number of buffers arranged of the ring buffer is represented by N and the buffer in current use is represented by "buf_No."

When reproduction of audio data is started in the digital TV recording/reproducing apparatus 10, storage of PCM data in the ring buffer is also started at step S61.

At step S62, the initial value of the parameter buf_No is set to "0." In this example, the maximum number of buf_No is equal to "N - 1."

At step S63, PCM data corresponding to one buffer is acquired. At step S64, the PCM data stored in the buffer is analyzed and it is detected by a prescribed (existing) silent data detecting method whether or not silent data is included therein. For example, the size of one buffer is set so as to enable storage of PCM data of one second. The number N of buffers is set at 20, for example.

If silent data exists (S64: yes), a silent data detection flag is set at step S65 and the process moves to step S66. If no silent data is detected (S64 : no), the process moves to step S66 without setting a silent data detection flag.

To switch the buffer to be used to the next one, the parameter buf_No is updated at step S66.

If the buffer in use has reached the end of the series of buffers (buf_No ≥ N; S67 : no), the buffer to be used is returned to the first one. If not (buf_No < N; S67: yes), PCM data is stored in the next buffer.

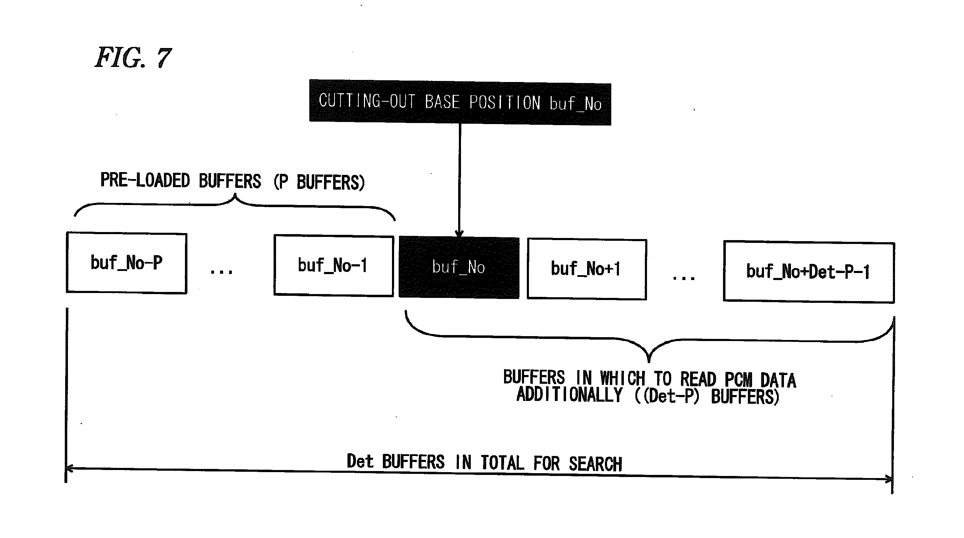

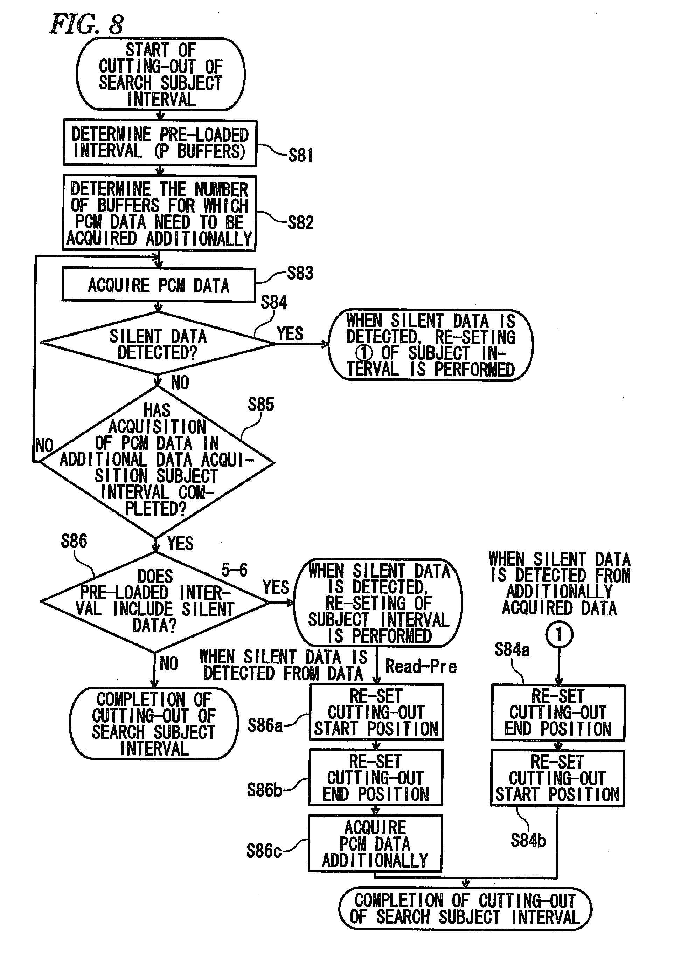

As for a method for selecting part of data stored in the ring buffer, the ring buffer is referred to upon reception of a search start instruction and a cutting-out range (Det buffers in total) is determined with the currently used buffer (represented by buf_No) as a cutting-out base point. Fig. 7 schematically shows this data selection method. A process flow will be described below with reference to Fig. 8.

At step S81, a predetermined number (P) of buffers among buffers that are already stored with PCM data are used as buffers stored with pre-loaded data. Where P = 0, the parameter buf_No is equal to "0." At step S82, for remaining necessary data, (Det - P) buffers including the base position buffer (represented by buf_No) are employed as an additional data acquisition subject buffers.

At step S83, data is acquired additionally. At step S84, whether or not the additionally acquired data includes a silent interval is judged by referring to the above-described flag. If a silent interval is detected from the additionally acquired data (S84: yes), since this silent interval occurred after the issuance of the search instruction by the user, it is judged that the target musical piece has already finished. The buffer that is stored with the silent data is removed from the search subject interval and a cutting-out start position is determined so that the immediately preceding buffer is made the end point. Whether or not silent data is stored in buffers that have been selected for determination of a cutting-out start position is not checked (to prevent an event that a search fails because of too short an audio interval).

At step S84a, the buffer buf_En immediately preceding the buffer where the silent data was detected is re-set as a cutting-out end position. At step S84b, the cutting-out start position is re-set to a buffer buf_En-Det+1 so that the number of buffers from the cutting-out start buffer to the thus-set end buffer becomes equal to Det. Search subject buffers [buf_En-Det+1, buf_En] are thus determined and the cutting-out process is completed.

If no silent interval is included in the additionally acquired data (S84: no), it is judged at step S85 whether or not the acquisition of PCM data in the additional data acquisition subject interval has completed. If the acquisition of PCM data has not completed yet (S85: no), the process returns to step S83.

If the acquisition of PCM data has already completed (S85: yes), it is judged at step S86 whether or not a silent interval is detected from the pre-loaded data. If a silent interval is detected from the pre-loaded data (S86: yes), at step S86a the buffer buf_St immediately succeeding the buffer where the silent interval was detected is re-set as a cutting-out start position.

At step S86b, the cutting-out end position is re-set to a buffer (buf_St+Det-1) so that the number of buffers from the thus-set cutting-out start buffer to the end buffer becomes equal to Det. At step S86c, PCM data are acquired additionally. The data that have been read into buffers are employed as search subject data irrespective of whether they include silent data. Search subject buffers [buf_St, buf_St+Det-1] are thus determined.

Thus, the search subject audio data cutting-out process is completed.

### <Modifications to embodiment>

### (1) Case that a silent interval is detected in pre-loaded data

At steps S86a and S86b, the cutting-out end buffer position is advanced. If silent data is also included in a newly employed buffer, a search subject interval is set in which the buffer immediately preceding the silent-data-detected buffer is made an end position buffer.

### (2) Use of real-time analysis results of an audio stream

Analysis results for, for example, chapter setting which is performed by another module during recording processing are used in the same manner as in a case that silent data has been detected (e.g., a cheer, a clap, or the like is prevented from being included in a search subject interval or the processing speed is increased using pre-loaded data of an already reproduced period at the start of a search by utilizing a music detecting function). For example, these functions can be implemented by using the techniques disclosed in JP-A-2012-32447 (the applicant is the same as of this application).

The following features of the embodiment make it possible to decrease the probability of occurrence of a detection error that occurs depending on the timing that a user issues a search instruction. This decreases the number of times of data analysis, which in turn makes it possible to realize an apparatus and a method with a low processing load.
(1) A silent interval is taken into consideration in acquiring target audio data for a song name search.
(2) A cutting-out start position and end position are determined in such a manner that a position corresponding to a time point when a user issues a search instruction is used as a base position.

The invention is not limited to the above embodiment and may be practiced in such a manner that constituent elements are modified in various manners without departing from the spirit and scope of the invention. For example, the audio signal source may be a radio broadcast, a non-broadcast delivery system, or a medium that is mounted in an apparatus or connected to an apparatus via a network.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information processing apparatus comprising:
a generator configured to generate an audio signal;
an instructing module configured to issue an instruction to search for song name information relating to the audio signal according to an external manipulation;
a cutting-out module configured to cut out a portion of the audio signal in an interval around a time of issuance of the search instruction;
a removing module configured to remove a silent portion in the cutting-out interval;
a sending module configured to send information in the silent-portion-removed cut-out interval to a server; and
a receiver configured to receive a search result of song name information relating to the information in the silent-portion-removed cut-out interval from the server.

2. The information processing apparatus according to claim 1, further comprising
an output module configured to output the search result.

3. The information processing apparatus according to claim 1, wherein
the information in the silent-portion-removed cut-out interval is feature quantities which allow the server to search for song name information.

4. The information processing apparatus according to claim 2, wherein
the output module is a result display module configured to display the search result.

5. An information processing method comprising:
generating an audio signal;
issuing an instruction to search for song name information relating to the audio signal according to an external manipulation;
cutting out a portion, in an interval around a time of issuance of the search instruction, of the audio signal;
removing a silent portion in the cutting-out interval;
sending information in the silent-portion-removed cut-out interval to a server; and
receiving a search result of song name information relating to the information in the silent-portion-removed cut-out interval from the server.
